(19) Europäisches Patentamt

European Patent Office

Office européen des brevets

(11) Veröffentlichungsnummer: **0 435 042 A2**

(12) **EUROPÄISCHE PATENTANMELDUNG**

(21) Anmeldenummer: 90123607.5

(22) Anmeldetag: 08.12.90

(51) Int. Cl.⁵: **B29C 51/42, B29B 13/02,**
//B29K81:00

(30) Priorität: 23.12.89 DE 3942891

(43) Veröffentlichungstag der Anmeldung:
**03.07.91 Patentblatt 91/27**

(84) Benannte Vertragsstaaten:
**DE FR GB IT**

(71) Anmelder: **BAYER AG**

**W-5090 Leverkusen 1 Bayerwerk(DE)**

(72) Erfinder: **Fischer, Frank, Dipl.-Ing., Uni. of
Washington
MBA-Program, Business Admin., 137
McKenzie Hall
DJ-10 Seattle, Washington 98195(US)**
Erfinder: **Dworeck, Erich
Sinnersdorfer Strasse 53
W-5024 Pulheim 1(DE)**
Erfinder: **Schulte, Bernhard, Dr.
Doppelfeldstrasse 15
W-4150 Krefeld(DE)**
Erfinder: **Klöpper, Hans-Joachim, Dipl.-Ing.
Treppenstrasse 15
W-5860 Iserlohn(DE)**

(54) Verfahren zum thermoplastischen Verformen von Kunststoffen.

㊄ Es wird ein Verfahren zum thermoplastischen Verformen von Kunststoffen beschrieben, bei dem die Aufheizung des Kunststoffes vor dem Umformen durch eine elektrisch leitende Kunststoffschicht geschieht, an die eine Spannung angelegt wird. Die Aufheizung wird durch die dabei entstehende Stromwärme bewirkt.

Das Verfahren besitzt gegenüber herkömmlichen Aufheizverfahren Vorteile in Bezug auf den technischen Aufwand, die Flexibilität und die Wirtschaftlichkeit.

EP 0 435 042 A2

# VERFAHREN ZUM THERMOPLASTISCHEN VERFORMEN VON KUNSTSTOFFEN

Die vorliegende Erfindung betrifft ein Verfahren zum thermoplastischen Verformen von Kunststoffen durch elektrische Kontaktheizung.

Beim Umformen thermoplastischer Halbzeuge existieren eine Reihe unterschiedlicher Verfahren zum Erwärmen eines Kunststoffes bis in einen Temperaturbereich hinein, in dem das Umformen möglich ist (s. H. Saechtling(Hrsg), Kunststoff Taschenbuch, 23.Aufl., Hanser Verlag München 1986, S.176, 179). Am gebräuchlichsten sind dabei die Verwendung von Umluft- Wärmeschränken und - besonders bei der industriellen Umformung großflächiger Halbzeuge-Strahlungsheizungen (Infrarotstrahler). Die Aufheizung der zu verformenden Kunststoffe kann bei der Anwendung dieser Verfahren entweder ein- oder zweiseitig erfolgen.

Das Umformen thermoplastischer Kunststoffe durch elektrische Kontaktheizung ist beispielweise in der Zeitschrift "Kunststoffe", Bd.63(1973), 5.710-715, beschrieben. Die Heizung erfolgt dabei durch Heizplatten, die elektrisch erwärmt werden. Die Heizplatten bestehen üblicherweise aus spannungsarmen Metalllegierungen, die teilweise noch mit Polytetrafluorethylen beschichtet sind. Dies soll ein Ankleben des Kunststoffes an den Heizplatten verhindern. Jedoch werden selbst bei solchermaßen präparierten Heizplatten Adhäsionsprobleme nur bei niedrigen Formungstemperaturen vermieden.

Ein weiterer gravierender Nachteil des üblichen elektrischen Kontaktheizverfahrens liegt in der Schwierigkeit, auf produktionsbedingte Vorschubänderungen, zum Beispiel bei Werkzeug- und Rapportwechsel, entsprechend reagieren zu können. Im wesentlichen beschränkt sich das elektrische Kontaktheizen daher auf Verpackungsstraßen bzw, Maschinen mit konstantem Stanzformat. Weiter ist aufgrund der Schwierigkeiten, großflächige Heizplatten für die industrielle Produktion herzustellen und zu betreiben, das Kontaktheizen im industiellen Maßstab nur bei relativ kleinen Formflächen (bis etwa 500 cm²) sowie geringer Foliendicken (< = 0,5 mm) anzutreffen. Das Umformen großflächiger und dicker Halbzeuge wurde bisher nahezu ausschließlich durch Strahlungsheizung vorbereitet.

Strahlungsheizung durch IR-Strahler nutzen jedoch nur den Anteil an eingespeister Energie, der in infrarotes Licht umgewandelt werden kann. Eine vollständige Nutzung der IR-Strahlung ist zudem nur durch aufwendige Spiegelkonstructicnen gewährleistet, die genau wie die Strahler selbst gegen Berührung und Verschmutzung abgeschirmt werden müssen.

Es bestand daher die Aufgabe, ein wirtschaftliches Verfahren zum thermoplastischen Umformen von Kunststoffen zu entwickeln, das bei Änderungen der Länge der Heizstrecke bzw. Dauer der Heizzeit, beispielsweise verursacht durch häufig wechselnde Formwerkzeuge, über eine weite Spanne unterschiedlicher Flächengrößen und Dicken ohne aufwendige Werkzeuggestaltung variabel einsetzbar ist.

Die vorliegende Erfindung löst diese Aufgabe dadurch, daß dem zu verformenden Kunststoff durch die Stromwärme mindestens einer in direkten Kontakt mit dem zu verformenden Kunststoff gebrachten, elektrisch leitenden Kunststoffschicht die zum thermoplastischen Verformen notwendige Wärmemenge zugeführt wird und der solchermaßen erwärmte Kunststoff nach an sich bekannten Verfahren verformt wird. Diese Verfahren können beispielsweise sein:

- Recken und Schrumpfen
- Umformen durch Abwinkeln um gerade oder krumme Biegeachsen
- Umformen durch Stenpel-, Gas- oder Flüssigkeitsdruck mit und ohne Gegenform, insbesondere Formstanzen, Prägen, Tiefziehen, Druckluftverformung und Vakuumverformung

Die zu verformenden Kunststoffe können alle thermoplastisch verarbeitbaren, auch mehrphasigen Polymerisationskunststoffe sein. Beispielsweise können neben Polycarbonaten, wie sie unten beschrieben werden, auch Polyarylensulfide, insbesondere Polyphenylensulfid, oder Polyester auf der Basis aromatischer Dicarbonsäuren und Glycolen nach dem neuen Verfahren umgeformt werden, ebenso Copolymere und Polymerblends wie beispielsweise Acrylnitril-Butadien-Styrol-Polymerisate.

Das Verfahren eignet sich auch für faserverstärkte Kunststoffe aus den oben erwähnten thermoplastischen Grundmaterialien, ebenso wie für temperaturbeständige Kunststoffe, also Kunststoffe, die sich oberhalb von 160°C oder sogar oberhalb von 180°C noch gut warmformen lassen und noch nicht schmelzen.

Als elektrisch leitende Kunststoffschicht, über die die Aufheizung des umzuformenden Kunststoffes in dem neuen Verfahren vorgenommen wird, können diejenigen leitenden Kunststoffe dienen, deren spezifische Leitfähigkeit groß genug ist, um eine zum Verformen ausreichende Stromwärme zu erzeugen. Insbesondere geeignet sind Kunststoffe mit einem spezifischen Widerstand von unter 10 Ωcm. Sehr gute Ergebnisse werden mit Kunststofen mit einem Widerstand von unter 3 Ωcm, besonders im Bereich von 1 Ωcm bis 0,4 Ωcm, erzielt. Spezifische Widerstände dieser Größenordnung können beispielsweise durch elektrisch leitende Kunststoffe mit Polycarbonaten als Ausgangsmaterial, insbesondere auf der Grundlage von Bisphenol A, wie zum Beispiel in EP 0141310 B1 beschrieben, oder auf Grundlage von Dihydroxydiphenylcycloalkanen, wobei die Cycloalkane bevorzugt mit Methylgruppen, insbesondere in der 3-bzw. 3,3'-Stellung, substituiert sind, erreicht werden. Besonders geeignet sind beispielsweise Kunststofffolien mit einem Anteil an Ruß als leitfähigem Zusatz, da metallische Leitzusätze die Korrosionsgefahr erhöhen und verstärkte Kerbwirkung in den Kunststoffen zeigen. Die Vorteile des neuen Verfahrens liegen insbesondere in dem relativ zur Größe des umzuformenden Halbzeuges geringen Verbrauch an elektrischer Energie. Durch die Vermeidung größerer Metallplatten, die zusätzlich aufgeheizt werden müssen und die auch zusätzlich die unerwünschten Wärmeverluste vergrößern, kann mit dem neuen Verfahren eine Aufheizung schneller und flexibler durchgeführt werden. Die zum Erzeugen der Stromwärme an die elektrisch leitende Kunststoffschicht angelegte Spannung kann dem Niedervoltnetz entnommen werden, also unter 500 Volt betragen. Insbesondere können die jeweiligen Netzspannungen verwendet werden. Gute Ergebnisse lassen sich jedoch auch bei Spannungen unter 220 Volt erzielen. Dies bedeutet eine Vereinfachung des apparativen Aufbaus und eine größere Sicherheit und Wirtschaftlichkeit. Des weiteren kann auf sich ändernde Heizstreckenlängen beispielweise durch eine passende Verschiebung der elektrischen Kontaktierung des leitenden Kunststoffes rasch reagiert werden. Ein weiterer Vorteil liegt in der einfachen Anpassung der elektrisch leitenden Kunststoffschicht an die aufgrund der Gestalt der herzustellenden Form aufzuheizende Fläche.

Eine besondere Durchführungsform ist dadurch gekennzeichnet, daß der Aufheizschritt erst im Formwerkzeug selbst geschieht.

Mit dieser Variante des neuen Verfahrens entfallen Aufheizstrecken und die damit verbundenen Schwierigkeiten.Zur Durchführung des Verfahrens müssen die herkömmlichen Formwerkzeuge nicht oder nur geringfügig an das neue Verfahren angepaßt werden.

Eine Durchführungsform des Verfahrens ist dadurch gekennzeichnet, daß die elektrisch leitende Kunststoffschicht mindestens einer äußeren Seite des zu verformenden Kunststoffes aufgelegt wird.

Sie ist geeignet, die verschiedensten thermoplastisch verarbeitbaren Kunststoffe zu verformen. Dabei wird die elektrisch leitende Schicht entweder kontinuierlich oder diskontinuierlich dem umzuformenden Halbzeug lose aufgelegt. Diese Auflage erfolgt ein- oder mehrseitig, wobei, wenn nötig, ein Verrutschen der aufgelegten Schicht durch geeignete Anpressverfahren wie zum Beispiel Andruckrollen oder -bänder verhindert wird.

Eine weitere Durchführungsform des Verfahrens ist dadurch gekennzeichnet, daß die elektrisch leitende Kunststoffschicht bereits vor dem Aufheizen mit dem umzuformenden Halbzeug fest verbunden wird.

Die feste Verbindung kann beispielsweise durch eine Klebung erreicht werden. Diese Variante des Verfahrens besitzt insbesondere den Vorteil, daß der zum Aufheizen notwendige apparative Aufbau auf die Stromzuführung beschränkt werden kann, wenn der umzuformende Kunststoff und die elektrisch leitende Schicht bereits dem Umformschritt angepaßt sind.

Eine bevorzugte Durchführungsform des Verfahrens ist dadurch gekennzeichnet, daß die elektrisch leitende Kunststoffschicht zwischen zu verformende Kunststoffteile plaziert wird.

Es lassen sich somit beispielsweise mehrere Formteile bei geeigneten Abmessungen in einem Preßschritt herstellen. Insbesondere im Zusammenhang mit dem Anspruch 4 kann das Aufheizen eines Kunststoffteils bei gleichmäßiger Verteilung der Wärmemenge geschehen. Da in diesem Verfahren die Kunststoffe nicht nur von den Außenseiten, sondern auch von innen erwärmt werden können, vermeidet man größere Temperaturgradienten. Der Kunststoff wird homogen erhitzt. Die maximale Dicke der zu verformenden Kunststoffe wird nicht durch den Aufheizschritt bestimmt.

Eine weitere, bevorzugte Durchführungsform des Verfahrens ist dadurch gekennzeichnet, daß die Stromwärme, die die elektrisch leitende Kunststoffschicht abgibt, durch die Variation der angelegten Spannung, der Aufheizzeit oder durch die Wahl eines leitenden Kunststoffes mit geeigneter elektrischer Leitfähigkeit gesteuert wird.

Die Menge der abgegebenen Stromwärme kann also nicht nur durch die Variation der der angelegten Spannung bzw. der Heizdauer definiert verändert werden, sondern auch durch Variation der Parameter, die elektrischen Leitfähigkeit der verwendeten leitenden Kunststoffschicht beeinflussen.

Dies können beispielsweise die Dicke der verwendeten Schicht, der Anteil an leitenden Zusätzen oder zusätzlich aufgenommenen Fremdstoffen wie Feuchtigkeit etc. sein. Damit beinhaltet das Verfahren eine große Anzahl an relativ leicht veränderbaren Steuerungsmöglichkeiten.

Das neue Verfahren wird durch die nachfolgenden Beispiele näher erläutert.

Beispiel 1:

Umgeformt wird ein Halbzeug aus endlosfaserverstärkter Polycarbonatfolie, hergestellt im Filmstackingverfahren aus 6 Lagen Glasgewebe mit Leinenbindung und 4 Lagen Polycarbonatfolie, mit einem Glasgehalt von 68%, einer Fläche von 400 cm$^2$ und einer Dicke von 1,7mm. Das elektrisch leitende Kunststoffmaterial besteht aus Polycarbonat mit einem leitenden Zusatz von Ruß. Der Rußanteil beträgt 28%, die Dicke der Schicht 100 μm. Die leitende Schicht ist auf das Halbzeug aufkaschiert.

Zum Anlegen der Spannung wird die elektrisch leitende Schicht mit Hilfe von zwei Metallklemmen an gegenüberliegenden Seiten kontaktiert. Danach wird das Halbzeug mit der aufkaschierten leitenden Schicht zwischen zwei PTFE-Platten fixiert, die der Strom- und Wärmeisolierung dienen. Die gesamte Anordnung steht unter einem leichten Druck von 0.1 N/mm$^2$, um ein Verrutschen der Anordnung zu verhindern.

Die Aufheizung geschieht durch das Anlegen von 220 Volt Wechselspannung. Die Stromstärke beträgt 2.5 Ampere. Nach 30 Sekunden beträgt die Temperatur des Halbzeuges 250°C. Es ergibt sich eine zur Aufheizung aufgewandte Energie von 0.0046 kWh.

Nach der Aufheizphase kann das Halbzeug in eine für das Umformen gewählte Form eingelegt werden.

Beispiel 2:

Umgeformt wird ein Halbzeug aus endlosfaserverstärkten Polyphenylensulfid, hergestellt im Filmstackingverfahren aus 5 Lagen Glasgewebe mit Leinenbindung und 4 Lagen Polyphenylensulfidfolie, mit einem Glasgehalt von 64%, einer Fläche von 400 cm$^2$ und einer Dicke von 1,5mm. Das elektrisch leitende Kunststoffmaterial besteht aus Polycarbonat mit einem leitenden Zusatz von Ruß. Der Rußanteil beträgt 28%, die Dicke der Schicht 100 μm. Die leitende Schicht ist auf das Halbzeug lose aufgelegt.

Danach wird das Halbzeug zwischen zwei PTFE-Platten fixiert, die der Strom- und Wärmeisolierung dienen. Die gesamte Anordnung steht unter einem leichten Druck von 0.1 N/mm$^2$, um ein Verrutschen der Schichten zu verhindern. Zum Anlegen der Spannung wird die elektrisch leitende Schicht mit Hilfe von zwei Metallklemmen an gegenüberliegenden Seiten kontaktiert.

Die Aufheizung geschieht durch das Anlegen von 210 Volt Wechselspannung. Die Stromstärke beträgt 3,0 Ampere. Nach 60 Sekunden beträgt die Temperatur des Halbzeuges 300°C. Es ergibt sich eine zur Aufheizung aufgewndte Energie von 0.0105 kWh.

Nach der Aufheizphase kann das Halbzeug in eine für das Umformen gewählte Form eingelegt werden.

Um die gleiche Platte mittels IR-Strahlung in handelsüblichen Aufheizanlagen auf diese Temperatur zu bringen, sind etwa 0.04 kWh notwendig.

**Ansprüche**

1. Verfahren zum thermoplastischen Verformen von Kunststoffen durch elektrische Kontaktheizung, dadurch gekennzeichnet, daß dem zu verformenden Kunststoff durch die Stromwärme mindestens einer in direktem Kontakt mit dem zu verformenden Kunststoff gebrachten, elektrisch leitenden Kunststoffschicht die zum thermoplastischen Verformen notwendige Wärmemenge zugeführt wird und der solchermaßen erwärmte Kunststoff nach an sich bekannten Verfahren verformt wird.

2. Verfahren nach Anspruch 1, dadurch gekennzeichnet, daß die Stromwärme dem zu verformenden Kunststoff im Formwerkzeug selbst zugefügt wird.

3. Verfahren nach Anspruch 1 oder 2, dadurch gekennzeichnet, daß die elektrisch leitende Kunststoffschicht mindestens einer äußeren Seite des zu verformenden Kunststoffes aufgelegt wird.

4. Verfahren nach Anspruch 1,2 oder 3, dadurch gekennzeichnet, daß die elektrisch leitende Kunststoffschicht fest mit dem zu verformenden Kunststoff verbunden wird.

5. Verfahren nach einem der Ansprüche 1 bis 4, dadurch gekennzeichnet, daß die elektrisch leitende Kunststoffschicht zwischen zu verformende Kunststoffteile plaziert wird.

6. Verfahren nach den Ansprüchen 1 bis 5, dadurch gekennzeichnet, daß die Stromwärme, die die elektrisch leitende Kunststoffschicht abgibt, durch die Variation der angelegten Spannung, der Aufheizzeit oder durch die Wahl eines leitenden Kunststoffes mit geeigneter elektrischer Leitfähigkeit gesteuert wird.